# EUROPÄISCHE PATENTSCHRIFT

(11) **EP 1 091 800 B1**
(45) Veröffentlichungstag und Bekanntmachung des Hinweises auf die Patenterteilung: **17.04.2002**
(21) Anmeldenummer: 99926475.7
(22) Anmeldetag: 29.05.1999
(51) Int. Cl.: B01J 19/00, B23K 1/00

(54) **VERFAHREN ZUR HERSTELLUNG EINES KOMPAKTEN KATALYTISCHEN REAKTORS**
METHOD FOR PRODUCING A COMPACT CATALYTIC REACTOR
PROCEDE POUR LA FABRICATION D'UN REACTEUR CATALYTIQUE COMPACT

(30) Priorität: 05.06.1998 DE 19825102
(43) Veröffentlichungstag der Anmeldung: 18.04.2001
(73) Patentinhaber: XCELLSIS GmbH, 73230 Kirchheim/Teck-Nabern (DE)
(72) Erfinder: LIPPERT, Marco, D-89346 Bibertal (DE); TISCHLER, Alois, D-94501 Aidenbach (DE); WEISSER, Marc, D-73270 Owen (DE)
(74) Vertreter: Kocher, Klaus-Peter Dipl.-Phys
(86) Internationale Anmeldenummer: EP9903737
(87) Internationale Veröffentlichungsnummer: WO9964146

(56) Entgegenhaltungen:
- EP-A- 0 430 184
- DE-A- 3 926 466
- DE-A- 19 654 361
- DE-A- 19 708 472
- US-A- 5 152 060

## Beschreibung

Die Erfindung betrifft ein Verfahren zur Herstellung eines kompakten katalytischen Reaktors gemäß Patentanspruch 1.

Solche kompakten katalytischen Reaktoren, sogenannte Mikroreaktoren, bestehen aus einzelnen dünnen, fein strukturierten Platten oder Blechen. Die Strukturierung dient zur Bildung feiner Strömungskanäle zur Verteilung der benötigten Medien. Die Bleche werden übereinander gestapelt und mit Grund- und Deckplatten sowie mit Zu- und Abführungen für die Medien versehen, so daß ein kompaktes Bauteil entsteht. Anschließend werden die Bleche gasdicht zusammengefügt, vorzugsweise durch Diffusionsschweißen. Aus der WO 88/06941 ist beispielsweise ein Mikrowärmetauscher aus mikrostrukturierten Blechen bekannt, der durch Löten zusammengefügt ist.

Es ist die Aufgabe der Erfindung, ein Verfahren zu schaffen, mit dem ein kompakter katalytischer Reaktor einfach und preiswert hergestellt werden kann.

Diese Aufgabe wird durch ein Verfahren mit den Merkmalen des Patentanspruchs 1 gelöst.

Durch das beanspruchte Herstellverfahren kann ein kompakter katalytischer Reaktor mit ausreichender Dichtigkeit und mechanischer Festigkeit hergestellt werden. Da bei allen Platten zumindest im Randbereich eine Lotschicht vorgesehen ist werden benachbarte Platten zumindest in diesem Randbereich durch den Lötvorgang gasdicht miteinander verbunden, so daß sich zwischen solchen benachbarten Platten jeweils abgeschlossene Reaktions- beziehungsweise Wärmeträgerräume ausbilden. Gleichzeitig wird in den Bereichen der Platten, in denen Katalysatormaterial vorgesehen ist, auf das Einbringen einer Lotschicht verzichtet. Dadurch kann eine Schädigung des Katalysatormaterials durch das Lotmaterial vermieden werden.

Die Festigkeit in dem Bereich der Platten, der mit Katalysator versehen ist, wird ausschließlich durch mechanischen Kontakt hergestellt. Werden zusätzlich alle Platten, die kein Katalysatormaterial aufweisen, vollständig mit einer Lotschicht versehen, so entstehen auch in den zentralen Bereichen dieser Platten Lotverbindungen, so daß die mechanische Festigkeit des Reaktors weiter verbessert werden kann.

Durch das Aufbiegen der Randbereiche können die Platten beim Aufeinanderstapeln auf einfache Art und Weise positioniert und während des Lötvorgangs fixiert werden. Gleichzeitig wird die Dichtigkeit verbessert.

Weiter Vorteile und Ausgestaltungen der Erfindung gehen aus den Unteransprüchen und der Beschreibung hervor. Die Erfindung ist nachstehend anhand einer Zeichnung näher beschrieben, wobei
- Fig. 1: eine Prinzipdarstellung eines erfindungsgemäß herzustellenden Reaktors,
- Fig. 2: eine weitere Ausgestaltung eines erfindungsgemäß herzustellenden Reaktors, und
- Fig. 3: ein weiters Ausführungsbeispiel eines erfindungsgemäß herzustellenden Reaktors mit Zwischenschichten,
- Fig. 4: ein viertes Ausführungsbeispiel eines erfindungsgemäß herzustellenden Reaktors mit Zwischenschichten und
- Fig. 5: ein fünftes Ausführungsbeispiel eines erfindungsgemäß hergestellten Reaktors mit gewellten Blechen zeigt.

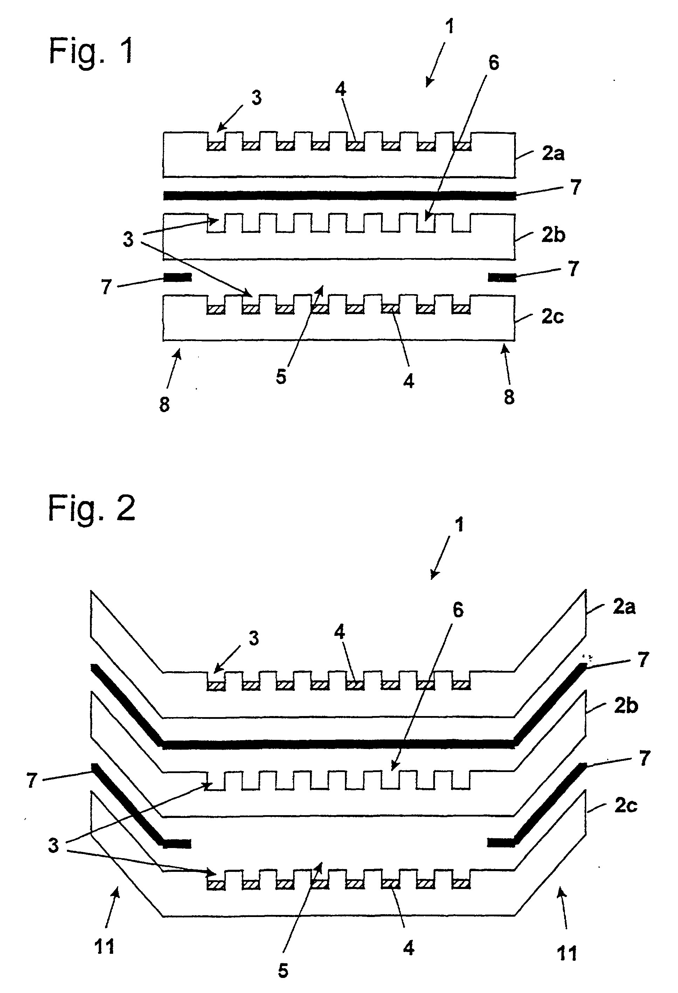

Der Aufbau von plattenförmigen katalytischen Reaktoren ist aus dem Stand der Technik allgemein bekannt und wird daher hier nur noch kurz anhand von Fig. 1 erläutert. Der insgesamt mit 1 gekennzeichnete katalytische Reaktor ist durch Aufeinanderstapeln von Platten, vorzugsweise in Form von Metallfolien 2a - 2c aufgebaut. Die Metallfolien 2a - 2c weisen zumindest in einen Teil der Oberfläche eingearbeitete Mikrostrukturen, beispielsweise in Form von Kanälen auf 3. Die Kanäle 3 dienen zur besseren Verteilung der beteiligten Reaktionsmedien. Durch Aufeinanderstapeln der Metallfolien 2a - 2c wird zwischen den einzelnen Metallfolien 2a - 2c ein mit einem Katalysatormaterial 4 versehener Reaktionsraum 5 und ein von einem Wärmeträgermedium durchströmter Wärmeträgerraum 6 ausgebildet. Der Stapel von Metallfolien 2a - 2c wird in Stapelrichtung jeweils durch nicht dargestellte Endplatten abgeschlossen. Die Zuführung der Reaktionsmedien kann in beliebiger Form innerhalb oder außerhalb des Plattenstapels erfolgen. Vorzugsweise erfolgt die Zufuhr durch sich in Stapelrichtung erstreckende, zur Vereinfachung jedoch nicht dargestellte Zu- und Abführkanäle, die durch entsprechende Bohrungen in den Metallfolien 2a - 2c gebildet werden. Die Zu- und Abfuhr der Reaktionsmedien zu und aus diesen Versorgungskanälen erfolgt über die Endplatten.

Prinzipiell hat ein solcher katalytischer Reaktor 1 die Funktion, thermische Energie aus dem Reaktionsraum 5 über ein Wärmeträgermedium abzuführen (exotherme Reaktion) oder in den Reaktionsraum 5 einzubringen (endotherme Reaktion).

Als Wärmeträgermedium kann beispielsweise ein Thermoöl verwendet werden. Bei endothermen Reaktionen ist es aber auch möglich, die benötigte thermische Energie direkt im Wärmeträgerraum 6 zu erzeugen. Hierzu wird ein chemischer Brennstoff als Wärmeträgermedium in den Wärmeträgerraum 6 geführt und dort mit Hilfe eines geeigneten Katalysators unter Zugabe von Sauerstoff oxidiert. Hierzu können beispielsweise platinhaltige Katalysatoren verwendet werden. Die bei der Oxidation frei werdende Energie wird auf den Reaktionsraum 5 übertragen. Das Katalysatormaterial 4 kann in beliebiger Form, beispielsweise als Schüttung oder Pellets, aber auch durch Beschichten der Metallfolien in den Reaktionsraum 5 eingebracht werden.

Im Reaktionsraum 5 können verschiedene Reaktionen ablaufen. Beispielsweise kann dort aus einem kohlenwasserstoffhaltigen Brennstoff durch Wasserdampfreformierung und/oder partielle Oxidation ein wasserstoffreiches Gas erzeugt werden. Weiterhin kann dort in einem wasserstoffreichen Gas enthaltenes Kohlenmonoxid durch selektive Oxidation entfernt werden. Schließlich kann im Reaktionsraum 5 ein Brennstoff möglichst vollständig oxidiert werden (katalytischer Brenner), wobei die frei werdende thermischer Energie entweder auf ein Wärmeträgermedium übertragen oder direkt zum Verdampfen eines flüssigen Mediums verwendet wird. Vorzugsweise werden solche katalytischen Reaktoren in sogenannten Gaserzeugungssystemen für mobile Brennstoffzellenanwendungen eingesetzt, wobei in diesen Gaserzeugungssystemen aus einem Brennstoff, beispielsweise Methanol, der für die Brennstoffzelle benötigte Wasserstoff erzeugt wird. Selbstverständlich kann ein erfindungsgemäß hergestellter katalytischer Reaktor 1 jedoch auch für beliebige andere Anwendungen verwendet werden.

Bei der Herstellung des katalytischen Reaktors 1 werden die einzelnen Metallfolien 2a - 2c durch Löten gasdicht miteinander verbunden. Hierzu wird zwischen benachbarten Metallfolien 2a - 2c jeweils eine Lotschicht 7 eingebracht. Diese Lotschicht 7 erstreckt sich zumindest über den Randbereich 8 der Metallfolien 2a - 2c. Sie kann in Form einer Lötfolie oder durch Beschichten der Ober- und/oder Unterseite der Metallfolien 2a - 2c eingebracht werden. Im Reaktionsraum 5 wird die Lotschicht 7 in dem Bereich, in dem Katalysatormaterial 4 angeordnet ist, ausgespart. Sie weist daher eine entsprechende Ausnehmung 10 auf, die beispielsweise durch Stanzen in die Lotschicht 7 eingebracht wird. Erfolgt die Zu- und Abfuhr der Reaktionsmedien wie oben beschrieben über in Stapelrichtung verlaufende Versorgungskanäle, so wird der Umfang eines Teiles der Bohrungen ebenfalls mit einer Lotschicht 7 versehen. Ist eine Bohrung mit einer Lotschicht 7 versehen, so ist die entsprechende Versorgungsleitung nach dem Zusammenbau gegen den zugehörigen Reaktionsbeziehungsweise Wärmeträgerraum 5, 6 abgedichtet. Ist eine Bohrung nicht mit einer Lotschicht 7 umgeben, so kann ein Austausch der Medien zwischen der Versorgungsleitung und dem zugehörigen Reaktions- beziehungsweise Wärmeträgerraum 5, 6 erfolgen.

Zur Herstellung des katalytischen Reaktors 1 können beispielsweise ansich bekannte Vakuum- oder Schutzgas-Lötverfahren eingesetzt werden, wobei die einzelnen Platten 2a - 2c durch Druck und Temperatur miteinander verlötet werden. Hierbei wird beispielsweise bei einer Temperatur von 700° - 1200° C gearbeitet. Die Temperatur muß jedoch so gewählt werden, daß das verwendete Katalysatormaterial 4 nicht beschädigt wird. Als Katalysatormaterial 4 kann beispielsweise ein platinhaltiger Edelmetallkatalysator auf einem Al₂O₃-Trägermaterial verwendet werden. Die Metallfolien 2a - 2c bestehen vorzugsweise aus Cr-Ni-Stahl mit einer Dicke von 0,3 - 0,5 mm. Die Platten 2a - 2c können jedoch auch aus einem anderen für diesen Einsatzzweck geeigneten Material bestehen. Die Lotschicht 7, vorzugsweise in Form eines Kupfer- oder Nickellotes, wird für den Vakuum-Lötprozeß optimiert und weist vorzugsweise eine Dicke von 30 - 100µm auf. Wir die Lotschicht 7 durch eine Beschichtung auf die Platten 2a - c aufgebracht, so weist die Schicht vorzugsweise eine Dicke von 10 - 40µm auf. Um zu verhindern, daß Lotmaterial beim Lötvorgang in Kontakt mit dem Katalysatormaterial 4 kommt, wird im Bereich des Reaktionsraumes 5 die Lotschicht 7 lediglich im Randbereich 8 der Metallfolien vorgesehen. Durch den Kontakt mit dem Lötmaterial könnte das Katalysatormaterial 4 nämlich zerstört oder zumindest in seiner Funktion beeinträchtigt werden.

Das in Fig. 1 dargestellte Ausführungsbeispiel zeigt exemplarisch den Aufbau eines erfindungsgemäßen katalytisches Reaktors 1 anhand dreier Metallfolien 2a - 2c. In Wirklichkeit weist ein katalytischer Reaktor 1 im allgemeinen eine Vielzahl solcher Metallfolien 2a - 2c auf und wird jeweils durch Endplatten begrenzt. In Fig. 1 sind alle Metallfolien 2a - 2c auf der Oberseite mit Kanälen 3 versehen. Zwischen den Metallfolien 2a und 2b bildet sich nach dem Zusammenfügen ein Wärmeträgerraum 6 aus. Die in der Metallfolie 2c eingebrachten Kanäle 3 sind zumindest teilweise mit einem Katalysatormaterial 4 gefüllt oder entsprechend beschichtet. Daher bildet sich zwischen den beiden Metallfolien 2b und 2c nach dem Zusammenfügen ein Reaktionsraum 5 aus. Während zwischen den Metallfolien 2a und 2b, also im Bereich des Wärmeträgerraumes 6, eine durchgehende Lötfolie 7 vorgesehen ist, erstreckt sich die entsprechende Lötfolie 7 zwischen den Metallfolien 2b und 2c, also im Bereich des Reaktionsraumes 5, nur über den Randbereich 8. Wird die Lotschicht 7 in Form einer Lötfolie eingebracht, so wird die Lötfolie entsprechend ausgestanzt. Wird die Lotschicht 7 durch Beschichten aufgebracht, so wird in dem später mit Katalysatormaterial 4 versehenen Bereich eine Abdeckung angeordnet. Diese kann dann vor dem Zusammenfügen der Metallfolien entfernt werden, so daß im mit Katalysatormaterial 4 versehenen Bereich des Reaktionsraumes 5 keine Lotschicht 7 vorhanden ist. In den Ausführungsbeispielen sind die Kanäle 3 zur Vereinfachung alle äquidistant und mit gleichem Querschnitt dargestellt. In Wirklichkeit können diese Kanäle 3 in beliebiger Anordnung und mit variablen Querschnitten in die Metallfolien 2a - 2c eingebracht werden. Insbesondere können auch größere zusammenhängende Vertiefungen vorgesehen werden. Nach dem Zusammenbau können die Reaktionsmedien dann in Gleich-, Gegen- oder auch in Querrichtung relativ zueinander geführt werden.

Abweichend von Fig. 1 weisen die Metallfolien 2a - 2c im Ausführungsbeispiel gemäß Fig. 2 einen aufgebogenen Randbereich 11 auf. Ansonsten sind gleiche Teile mit entsprechenden Bezugszeichen gekennzeichnet. Das Umbiegen der Randbereiche 11 erfolgt vorzugsweise vor dem Aufeinanderstapeln der Metallfolien 2a - 2c. Durch das Umbiegen der Randbereiche 11 erhalten die Metallfolien 2a - 2c eine Art Wannenform. Dadurch werden die Metallfolien 2a - 2c beim Aufeinanderstapeln automatisch gegeneinander justiert. Außerdem wird dadurch die Dichtigkeit der Anordnung verbessert. Auch in diesem Ausführungsbeispiel kann die Lotschicht 7 in Form einer Lötfolie oder durch Beschichten der Metallfolien 2a - 2c eingebracht werden.

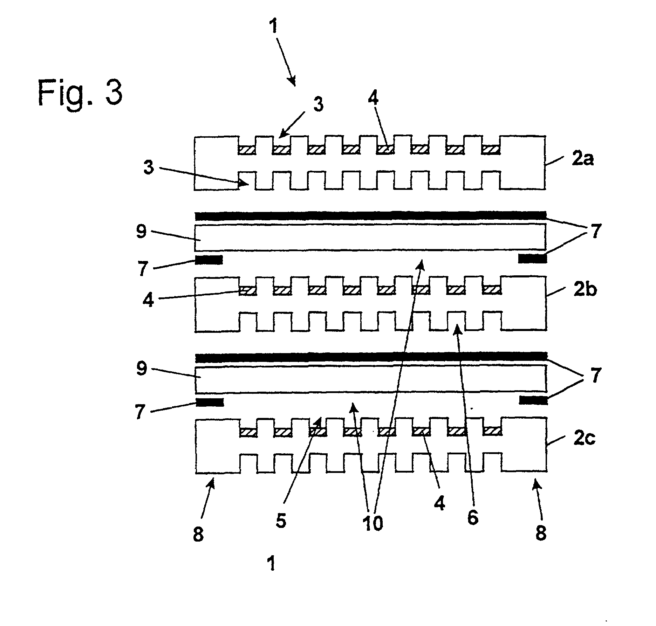

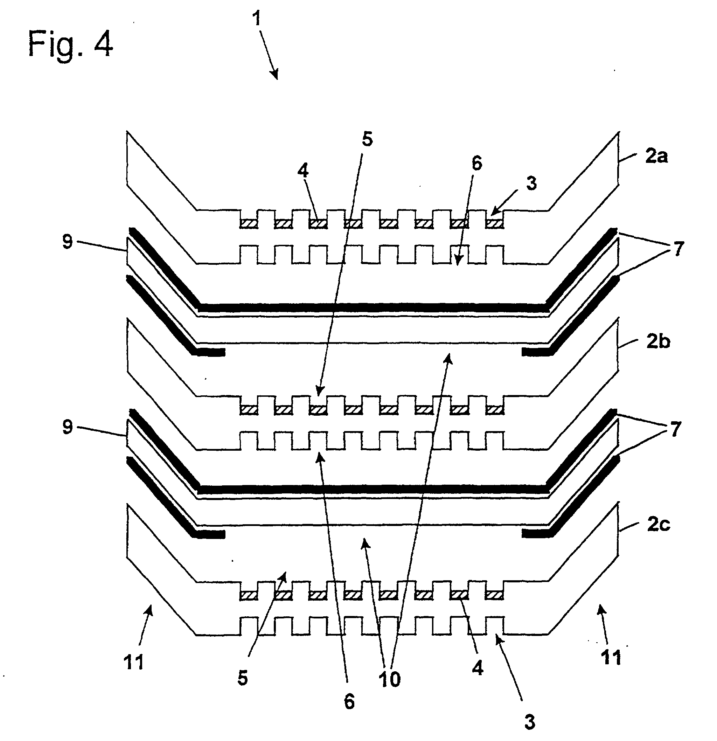

In den katalytischen Reaktoren 1 gemäß den Fig. 3 und 4 sind zusätzlich zwischen den einzelnen strukturierten Metallfolien 2a - 2c unstrukturierte Zwischenplatten 9 angeordnet. Abweichend von den Fig. 1 und 2 weisen die Metallfolien 2a - 2c auf beiden Seiten Kanäle 3 auf, wobei im dargestellten Ausführungsbeispiel die jeweils oberen Kanäle 3 im Zusammenspiel mit der jeweils benachbarten Zwischenplatte 9 einen Reaktionsraum 5 und die jeweils unteren Kanäle 3 entsprechend einen Wärmeträgerraum 6 ausbilden. Die Zwischenplatte 9 ist daher auf der Oberseite, also der dem Wärmeträgerraum 6 zugewandten Fläche vollständig mit einer Lotschicht 7 versehen, während die Lotschicht 7 auf der Unterseite, also der dem Reaktionsraum 5 zugewandten Fläche, eine Ausnehmung 10 aufweist. Somit kommt auch bei dieser Anordnung mit Zwischenplatte 9 das Katalysatormaterial 4 im Reaktionsraum 5 nicht in Kontakt mit der Lotschicht 7. Selbstverständlich kann die Anordnung des Reaktionsraumes 5 beziehungsweise des Wärmeträgerraumes 6 auch vertauscht werden. Außerdem müssen die Räume 5, 6 nicht in der dargestellten Reihenfolge angeordnet werden. Die Reihenfolge kann vielmehr frei gewählt werden. Auch ist es möglich, in einer Metallfolie 2a - 2c jeweils auf beiden Seiten Reaktionsräume 5 oder Wärmeträgerräume 6 vorzusehen.

Prinzipiell ergibt sich durch das beanspruchte Herstellverfahren ein katalytischer Reaktor 1, bei dem die einzelnen Metallfolien 2a - 2c zumindest im Randbereich 8, 11 durch eine Lotverbindung fest und gasdicht miteinander verbunden sind. Auch im Bereich der Wärmeträgerräume 6 ergeben sich feste Lotverbindungen zwischen den Erhebungen im Wärmeträgerraum 6 und der unstrukturierten Oberfläche der benachbarten Metallfolie 2a - 2c beziehungsweise Zwischenplatte 9. Im Bereich der Reaktionsräume 5 ergeben sich allerdings nur mechanische Verbindungen. Diese sind aber in Kombination mit den vorhandenen Lotverbindungen für die geforderte Belastbarkeit der katalytischen Reaktoren 1 ausreichend. Im Ausführungsbeispiel gemäß Fig. 4 weisen auch die Zwischenplatten 9 einen aufgebogenen Randbereich 11 auf. Unter Umständen ist es wünschenswert, zwischen den strukturierten Oberflächen der Metallfolien 2a - 2c und den unstrukturierten Oberflächen der benachbarten Metallfolie 2a - 2c beziehungsweise Zwischenplatte 9 im Bereich des Reaktionsraumes 5 und/oder des Wärmeträgerraumes 6 einen definierten Spalt vorzusehen. In diesem Fall wird eine Zwischenplatte 9 verwendet, die über den gesamten Bereich oder auch nur einen Teilbereich des Reaktionsraumes 5 und/oder des Wärmeträgerraumes 6 entsprechende Vertiefungen oder Ausnehmungen 10 aufweist. Damit können auf einfache Art und Weise Reaktionsräume 5 und/oder Wärmeträgerräume 6 mit einem definierten Spalt ausgebildet werden.

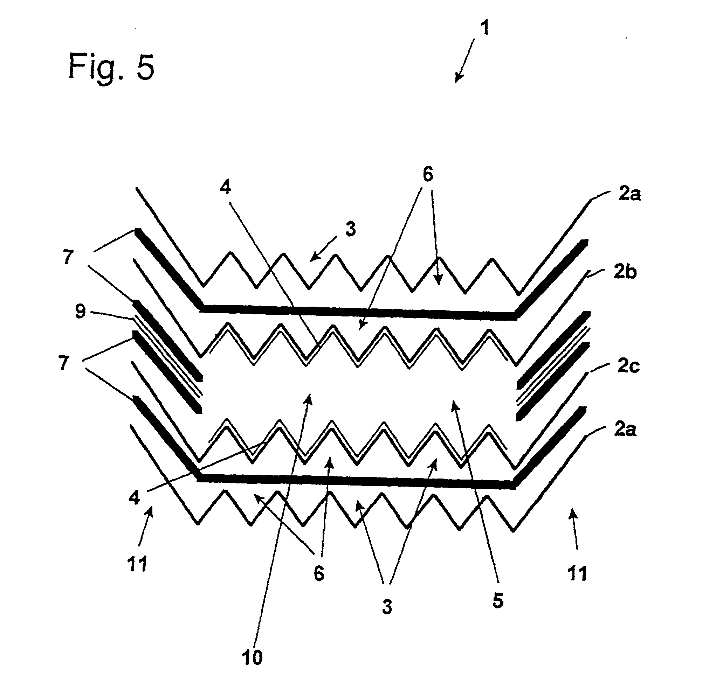

Ein solches Beispiel zeigt Fig. 5, wobei wiederum gleiche Teile mit gleichen Bezugszeichen gekennzeichnet sind. Abweichend von den bisherigen Ausführungsbeispielen werden hierbei keine mit Strukturen versehene Metallfolien, sondern gewellte Bleche als Platten 2a - 2c verwendet. Die Kanäle 3 werden daher durch die Wellen der Bleche 2a - 2c ausgebildet. Ebenfalls abweichend von den obigen Ausführungsbeispielen ist in Fig. 4 auch die Abfolge der einzelnen Bestandteile und gegebenenfalls auch der Räume 5, 6. Die Strukturierung der Bleche 2a - 2c ist vorzugsweise derart ausgeführt, daß die Wellen aufeinanderfolgender Bleche nicht deckungsgleich verlaufen, sondern sich schneiden. Daher werden aufeinanderfolgende Bleche beim Zusammenbau nicht ineinander geschoben, sondern jeweils ein Wellental des einen Bleches berührt einen Wellenberg des nächsten Bleches, so daß lediglich punktuelle Lötverbindungen entstehen.

Das Katalysatormaterial 4 wird in den Reaktionsraum 5 durch Beschichtung der Bleche 2b, 2c eingebracht. Hierbei sind die lediglich die jeweils dem Reaktionsraum 5 zugewandten Oberflächen der Bleche 2b, 2c beschichtet. Im Ausführungsbeispiel gemäß Fig. 5 bedeutet dies, daß die Unterseite des Bleches 2a und die Oberseite des Bleches 2b im Bereich des Reaktionsraumes 5 mit Katalysatormaterial 4 beschichtet ist. Die beiden Bleche 2a, im Ausführungsbeispiel ganz oben und ganz unten angeordnet, sowie die Randbereiche 11 aller Bleche 2a - 2c, sind nicht mit Katalysatormaterial 4 beschichtet. Somit werden zwischen den Blechen 2a und 2b beziehungsweise zwischen 2c und 2a Wärmeträgerräume 6 -ausgebildet. Im Ausführungsbeispiel ist zwischen den Blechen 2a und 2b beziehungsweise zwischen 2c und 2a jeweils eine Lotschicht 7 vorgesehen, so daß sich nach dem Lötprozess - hierbei sammelt sich das Lot an den Berührungspunkten der Bleche - jeweils ein einziger durchgehender Wärmeträgerraum 6 ausbildet. Es ist aber auch möglich, statt dessen ein beidseitig mit einer Lotschicht versehene Zwischenplatte 9 vorzusehen, so daß sich dann jeweils zwei aufeinanderfolgende Wärmeträgerräume 6 ausbilden würden.

Zwischen den beiden mit Katalysatormaterial 4 versehenen Blechen 2b und 2c ist eine beidseitig mit einer Lotschicht 7 versehene Zwischenplatte 9 vorgesehen. Diese Zwischenplatte 9 weist im Bereich des Reaktionsraumes 5 eine Ausnehmung 10 auf. Dadurch wird zwischen den Blechen 2b und 2c ein definierter Spalt ausgebildet. Es wäre aber auch möglich, die mit Lot beschichtete Zwischenplatte 9 durch eine entsprechende einfache Lotschicht 7 zu ersetzen. In diesem Falle würde sich ein solcher Spalt ausbilden. Entscheidend ist nur, daß wiederum im Bereich des Reaktionsraumes 5 keine Lotschicht 7 vorgesehen ist. Analog zu den anderen Ausführungsbeispielen kann auch hier im Reaktionsraum 5 anstelle der Beschichtung das Katalysatormaterial in Form einer Schüttung oder Pellets eingebracht werden.

## Patentansprüche

1. Verfahren zur Herstellung eines kompakten katalytischen Reaktors (1), wobei
- durch Aufeinanderstapeln von zumindest teilweise strukturierten Platten (2a-c) abwechselnd Reaktionsbeziehungsweise Wärmeträgerräume (5, 6) ausgebildet werden,
- in die Reaktionsräume (5) Katalysatormaterial (4) eingebracht wird,
- zumindest im Randbereich (8), jedoch nicht im mit Katalysatormaterial (4) versehenen Bereich der Platten (2a-c) eine Lotschicht (7) vorgesehen wird, und wobei
- die Platten (2a-c) nach dem Aufeinanderstapeln zu einem Katalytischer Reaktor (1) verlötet werden.

2. Verfahren nach Anspruch 1,
**dadurch gekennzeichnet,**
**daß** das Katalysatormaterial (4) in Form einer Schüttung und/oder Pellets oder durch Beschichtung der Platten (2a-c) in die Reaktionsräume (5) eingebracht wird.

3. Verfahren nach Anspruch 1,
**dadurch gekennzeichnet,**
**daß** Metallfolien oder gewellte Bleche als Platten (2a-c) verwendet werden.

4. Verfahren nach Anspruch 1,
**dadurch gekennzeichnet,**
**daß** das Lot durch Beschichten der Platten (2a-c) oder in Form einer Lotschicht (7) eingebracht wird.

5. Verfahren nach Anspruch 4,
**dadurch gekennzeichnet,**
**daß** in die Lotschicht (7) im mit Katalysatormaterial (4) versehenen Bereich der Reaktionsräume (5) Ausnehmungen eingebracht werden.

6. Verfahren nach Anspruch 1,
**dadurch gekennzeichnet,**
**daß** die dem Wärmeträgerraum (6) zugewandten Platten (2a-c) vollständig mit einer Lotschicht (7) versehen werden.

7. Verfahren nach Anspruch 1,
**dadurch gekennzeichnet,**
**daß** die Platten (2a-c) vor dem Aufeinanderstapeln an den Rändern (8) umgebogen werden und daß zumindest diese aufgebogenen Randbereiche (11) mit einer Lotschicht (7) versehen sind.

8. Verfahren nach Anspruch 1,
**dadurch gekennzeichnet,**
**daß** jeweils zwischen zwei strukturierten Platten (2a-c) eine unstrukturierte Zwischenplatte (9) vorgesehen wird und daß die Lotschicht (7) ausschließlich und beidseitig auf die Zwischenplatten (9) aufgebracht wird.

9. Verfahren nach Anspruch 8,
**dadurch gekennzeichnet,**
**daß** die Lotschicht (7) auf der dem mit Katalysatormaterial (4) gefüllten Reaktionsraum (5) zugewandten Oberfläche der Zwischenplatte (9) eine Ausnehmung (10) aufweist.

10. Verfahren nach Anspruch 8,
**dadurch gekennzeichnet,**
**daß** die Zwischenplatte (9) zur Ausbildung eines definierten Spaltes im Bereich des Reaktionsraumes (5) und/oder des Wärmeträgerraum (6) eine Vertiefung und/oder Ausnehmung aufweist.

## Claims

1. Process for producing a compact, catalytic reactor (1), whereby
- alternating forms of interaction of heat-bearing spaces (5, 6) are formed by the piling, one on another, of at least partially textured plates (2a-c),
- catalytic material (4) is introduced into the reaction spaces (5),
- a solder layer (7) is provided on the plates (2a-c), at least in the rim area (8), although not in the area, of the plates (2a-c), which is supplied with the catalytic material (4), and whereby
- the plates (2a-c) are brazed, after piling, to form a catalytic reactor (1).

2. Process in accordance with claim 1,
**characterized in that**
the catalytic material (4) is introduced into the reaction spaces (5) in the form of filling and/or pellets, or by coating the plates (2a-c).

3. Process in accordance with claim 1,
**characterized in that**
metal sheets or corrugated sheet metal are used as plates (2a-c).

4. Process in accordance with claim 1,
**characterized in that**
the solder is applied by coating the plates (2a-c) with solder, or in the form of a layer of solder (7).

5. Process in accordance with claim 1,
**characterized in that**
recesses are introduced into the solder layer (7) in the area of the reaction spaces (5) which is provided with catalytic material (4).

6. Process in accordance with claim 1,
**characterized in that**
the facing plates (2a-c) in the heat-bearing space (6) are fully provided with a layer (7) of solder.

7. Process in accordance with claim 1,
**characterized in that**
the plates (2a-c) are arched round at the rims (8) before piling, and that at least these rim areas (11) are provided with a layer of solder (7).

8. Process in accordance with claim 1,
**characterized in that**
an untextured intermediate plate (9) is in each case provided between two textured plates (2a-c), and **in that** the layer of solder (7) is applied exclusively and to both sides of the intermediate plate (9).

9. Process in accordance with claim 1,
**characterized in that**
the layer (7) of solder has a recess (10) on the surface of the intermediate plate (9) which faces the reaction space (5) which is filled with the catalytic material (4).

10. Process in accordance with claim 1,
**characterized in that**
the intermediate plate (9) has an indentation and/or recess to form a specific gap in the area of the reaction space (5) and/or of the heat-bearing space (6).

## Revendications

1. Procédé pour la fabrication d'un réacteur catalytique compact (1), dans lequel
- des espaces caloporteurs (5, 6) se modifiant en fonction de la réaction sont formés par des empilements les uns au-dessus des autres de plateaux (2a-c) au moins en partie structurés,
- un matériau catalytique (4) est introduit dans l'espace réactionnel (5), au moins dans le domaine du bord (8), cependant pas dans le domaine prévu avec le matériau catalytique, des plateaux (2a-c) une couche de brasure (7) est prévue, et dans lequel
- les plateaux (2a-c) sont brasés après les empilements les uns sur les autres en un réacteur catalytique (1).

2. Procédé selon la revendication 1, **caractérisé en ce que** le matériau catalytique (4) est introduit sous forme d'un remplissage et/ou de granulés ou par revêtement des plateaux (2a-c) dans l'espace réactionnel (5).

3. Procédé selon la revendication 1, **caractérisé en ce qu'**on utilise comme plateaux (2a-c) des feuilles de métal ou des tôles ondulées.

4. Procédé selon la revendication 1, **caractérisé en ce que** la brasure est introduite par revêtement des plateaux (2a-c) ou sous forme d'une couche de brasure (7).

5. Procédé selon la revendication 4, **caractérisé en ce que** dans la couche de brasure (7) sont introduits des creux dans le domaine prévu avec le matériau catalytique (4) de l'espace réactionnel (5).

6. Procédé selon la revendication 1, **caractérisé en ce que** les plateaux (2a-c) tournés vers l'espace caloporteur (6) sont prévus remplis avec la couche de brasure (7).

7. Procédé selon la revendication 1, **caractérisé en ce que** les plateaux (2a-c) sont recourbés avant les empilements les uns sur les autres sur les bords (8) et qu'au moins ces domaines recourbés (11) sont prévus avec une couche de brasure (7).

8. Procédé selon la revendication 1, **caractérisé en ce que** chaque fois entre deux plateaux structurés (2a-c) est prévue une plaque intermédiaire non structurée (9) et que la couche de brasure (7) est amenée des deux côtés sur les plaques intermédiaires (9).

9. Procédé selon la revendication 8, **caractérisé en ce que** la couche de brasure (7) présente un creux (10) sur la surface de la plaque intermédiaire (9) tournée vers l'espace réactionnel (5) rempli du matériau catalytique (4).

10. Procédé selon la revendication 8, **caractérisé en ce que** la plaque intermédiaire (9) présente, pour la formation d'une fente définie dans le domaine de l'espace réactionnel (5) et/ou de l'espace caloporteur (6) un évidement et/ou un creux.
